# FASCICULE DE BREVET EUROPEEN

(11) **EP 3 645 907 B1**
(45) Date de publication et mention de la délivrance du brevet: **05.05.2021**
(21) Numéro de dépôt: 18749434.9
(22) Date de dépôt: 14.06.2018
(51) Int. Cl.: F16D 51/24, F16D 65/00

(54) **PLATEAU DE FREIN A TAMBOUR DE VEHICULE AUTOMOBILE, FREIN A TAMBOUR ASSOCIE ET PROCEDE D'ASSEMBLAGE ASSOCIE**
PLATTE FÜR EINE TROMMELBREMSE EINES KRAFTFAHRZEUGS, ZUGEHÖRIGE TROMMELBREMSE UND ZUGEHÖRIGES MONTAGEVERFAHREN
PLATE FOR A DRUM BRAKE OF A MOTOR VEHICLE, ASSOCIATED DRUM BRAKE AND ASSOCIATED ASSEMBLY METHOD

(30) Priorité: 29.06.2017 FR 1756024
(43) Date de publication de la demande: 06.05.2020
(73) Titulaire: Foundation Brakes France SAS, 93700 Drancy (FR)
(72) Inventeur: EBLE, Philippe, 60260 Lamorlaye (FR); GUIGNON, Cédric, 94510 La Queue En Brie (FR); LEVASSORT, Ludovic, 95630 Meriel (FR); NICLOT, Pierre-Marc, 75019 Paris (FR); TISSIER, Grégory, 75011 Paris (FR)
(74) Mandataire: Cabinet Nuss
(86) Numéro de dépôt international: PCT/FR2018/051413
(87) Numéro de publication internationale: WO 2019/002715

(56) Documents cités:
- FR-A- 1 149 905
- US-A- 3 200 908

## Description

La présente invention concerne le domaine des freins à tambour pour véhicule automobile, plus particulièrement les plateaux de tels freins à tambour.

De tels freins à tambour sont connus, ils comportent en général un plateau supportant deux segments chacun munis d'une garniture de frein et un cylindre de roue permettant l'actionnement de ces segments.

En fonctionnement, les freins à tambour de l'art antérieur présentent toutefois l'inconvénient d'être bruyants. En particulier, le cylindre de roue est, de manière connue, fixé au plateau par l'intermédiaire d'une ou de plusieurs vis de fixation. Lors du freinage les vibrations générées sont transmises du cylindre de roue à l'essieu arrière par l'intermédiaire du plateau. Il en résulte la création d'un bruit de crissement qui est amplifié par le plateau. La fréquence critique associée à ce bruit est de l'ordre de 1,1 kilohertz.

Le document FR1149905 A3 montre un plateau pour frein à tambour d'après le préambule de la revendication 1.

La présente invention a pour but de proposer une solution plus silencieuse, aisée à fabriquer et à assembler, permettant de surmonter au moins les limitations principales de l'état de la technique indiquées ci-dessus.

L'invention concerne un plateau pour frein à tambour de véhicule automobile présentant un bord circulaire et un centre comprenant :
une première surface apte et destinée à être montée fixe par rapport à un essieu,
une seconde surface opposée à la première surface,
la seconde surface comprenant une base centrale sensiblement plane munie d'un premier orifice centré par rapport au centre,
la seconde surface étant apte et destinée à supporter au moins un segment, et au moins un cylindre de roue hydraulique au niveau d'une zone de réception, la zone de réception comprenant une partie d'appui apte et destinée à être au moins en partie en contact avec le cylindre de roue et dans laquelle est ménagé un deuxième orifice apte et destiné à former un accès au cylindre de roue, au moins un troisième orifice de fixation apte et destiné à être traversé par des moyens de fixation,
la zone de réception formant une partie en relief saillante par rapport à la base centrale, la partie en relief saillante comprenant une paroi latérale surmontée par la partie d'appui, plateau caractérisé en ce que la partie d'appui présente une forme convexe.

L'invention concerne également un frein à tambour de véhicule automobile comprenant le plateau tel que décrit précédemment.

L'invention concerne également un procédé d'assemblage d'un frein à tambour de véhicule automobile caractérisé en ce qu'il comporte au moins les étapes suivantes :
a) une étape de montage d'un cylindre de roue sur un plateau tel que décrit précédemment, lors de laquelle un cylindre de roue est monté sur la partie d'appui de forme convexe et est fixé à la partie d'appui par des moyens de fixation au travers du troisième orifice,
b) une étape de vérification lors de laquelle une cale présentant une épaisseur pré-calibrée est interposée dans un espace entre la partie d'appui et la surface du cylindre de roue situé en regard de la partie d'appui.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un plateau de frein à tambour selon l'invention,
la figure 2 est une vue en perspective du plateau de frein à tambour représenté à la figure 1 avec de la résine,
la figure 3A est une vue de face du plateau de frein à tambour représenté à la figure 1,
la figure 3B est une vue en coupe selon le plan sécant A-A du plateau de frein à tambour représenté à la figure 3A,
la figure 4 est une vue en perspective du plateau de frein à tambour représenté à la figure 1 ou à la figure 2 muni d'un cylindre de roue,
la figure 5 est une vue en perspective du plateau de frein à tambour représenté à la figure 4 montrant la cale,
la figure 6A est une vue de face du plateau de frein à tambour représenté à la figure 5,
la figure 6B est une vue en coupe selon le plan sécant B-B du plateau de frein à tambour représenté à la figure 6A, et
la figure 7 est une vue en perspective d'un frein à tambour selon l'invention.

Le plateau 1 pour frein à tambour de véhicule automobile présentant un bord circulaire 2 et un centre O comprend :
une première surface 3 apte et destinée à être montée fixe par rapport à un essieu,
une seconde surface 4 opposée à la première surface 3,
la seconde surface 4 comprenant une base centrale 5 sensiblement plane munie d'un premier orifice 6 centré par rapport au centre O,
la seconde surface 4 étant apte et destinée à supporter au moins un segment 7, et au moins un cylindre de roue 8 hydraulique au niveau d'une zone de réception 9, la zone de réception 9 comprenant une partie d'appui 10 apte et destinée à être au moins en partie en contact avec le cylindre de roue 8 et dans laquelle est ménagé un deuxième orifice 11 apte et destiné à former un accès au cylindre de roue 8, au moins un troisième orifice 12 de fixation apte et destiné à être traversé par des moyens de fixation (non représentés).

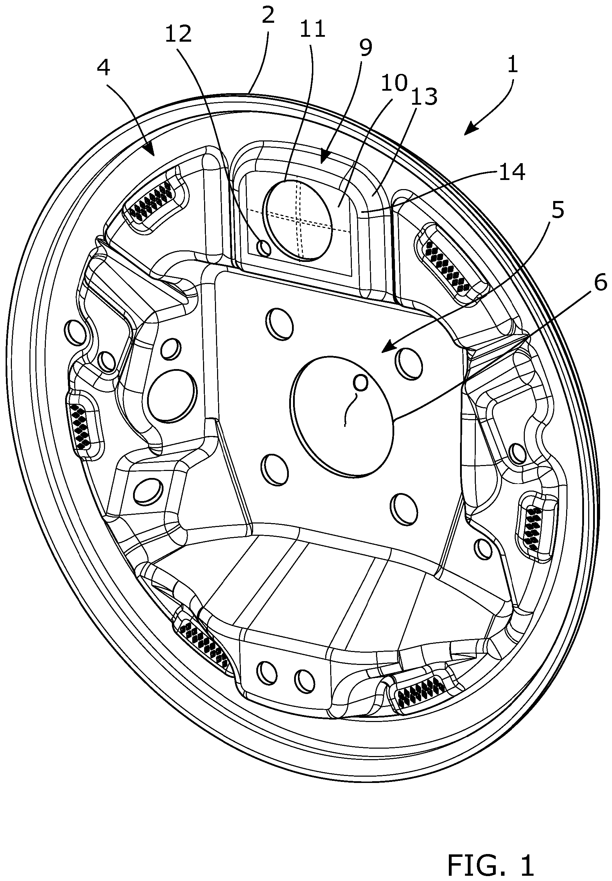

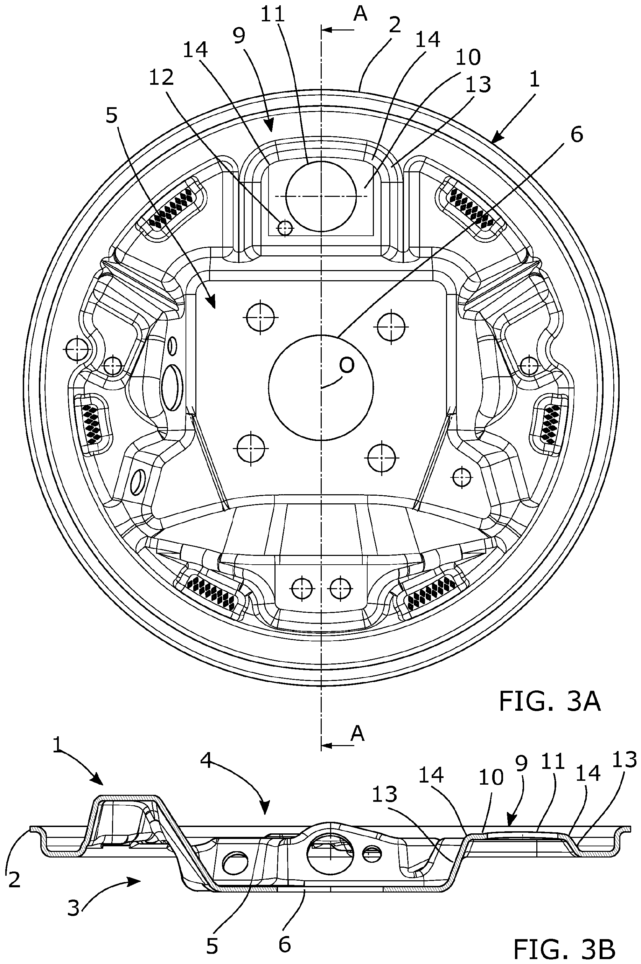

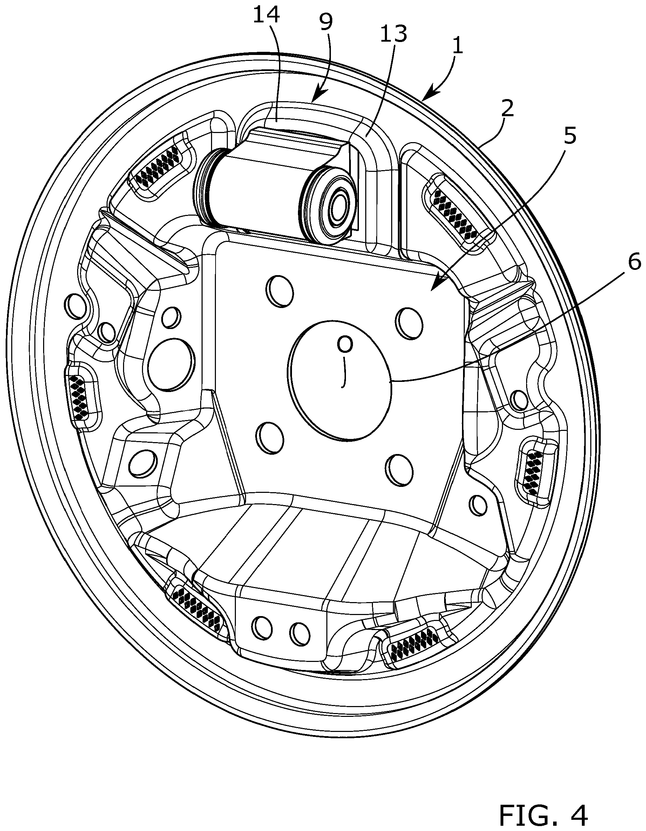

Conformément à l'invention, le plateau 1 est caractérisé en ce que la zone de réception 9 forme une partie en relief saillante par rapport à la base centrale 5, la partie en relief saillante comprenant une paroi latérale 13 surmontée par la partie d'appui 10 et en ce que la partie d'appui 10 présente une forme convexe (figures 1, 2, 3B, 4, 5 et 7).

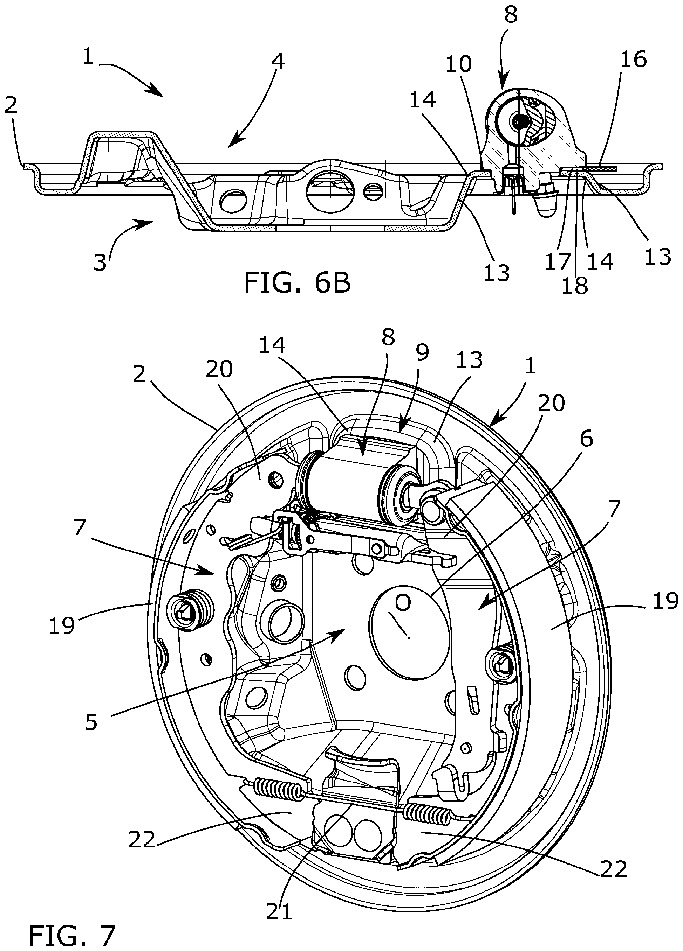

Avantageusement, cette forme convexe de la partie d'appui 10 permet, lorsque le cylindre de roue 8 est monté sur le plateau 1, de minimiser le couplage vibratoire entre le cylindre de roue 8 et la partie d'appui 10 du plateau 1 de frein, comparativement à une partie d'appui 10 de forme plane, qui est connue de l'art antérieur. Dans cette configuration, lorsque le cylindre de roue 8 est monté sur le plateau 1, le cylindre de roue 8 est au moins en partie en contact avec la partie d'appui 10 de la zone de réception 9 et ce contact est minimisé, comparativement à une partie d'appui 10 de forme plane, comme c'est le cas dans l'art antérieur (figure 6B). En conséquence, les vibrations lors du freinage hydraulique du cylindre de roue 8, qui sont transmises au plateau 1 de frein, puis à l'essieu arrière du véhicule, sont réduites. Il en résulte une diminution des phénomènes de bruit à basses fréquences occasionnés par ces vibrations. En outre, cette configuration nécessite simplement de modifier la forme du plateau 1 de frein au niveau de la zone de réception 9 sans avoir à ajouter des éléments additionnels au plateau 1. L'invention peut donc aisément être intégrée à un procédé de fabrication existant de plateau 1 de frein sans en augmenter les coûts de fabrication. Par ailleurs, cette modification ne dégrade en rien ni la durabilité du plateau 1 ni la fonction hydraulique du plateau 1. Enfin, cette modification de la forme du plateau 1 de frein a très peu d'impact sur le procédé d'assemblage du frein à tambour.

La partie d'appui 10 présente avantageusement une forme convexe de convexité comprise entre 0,2 et 1 millimètre.

Avantageusement, dans cette plage de valeur de convexité, la forme convexe est optimale pour minimiser le couplage entre le cylindre de roue 8 et la partie d'appui 10.

La partie d'appui 10 de forme convexe est avantageusement entourée par un bord courbé 14 la reliant à la paroi latérale 13.

Dans ce cas, le bord courbé 14 présente avantageusement un rayon de courbure compris entre 2 et 10 millimètres. Et la paroi latérale 13 est avantageusement inclinée par rapport à la partie d'appui 10 d'un angle compris entre 90° et 150°.

Le plateau 1 de frein tel que décrit est avantageusement obtenu par un procédé d'emboutissage d'un matériau métallique.

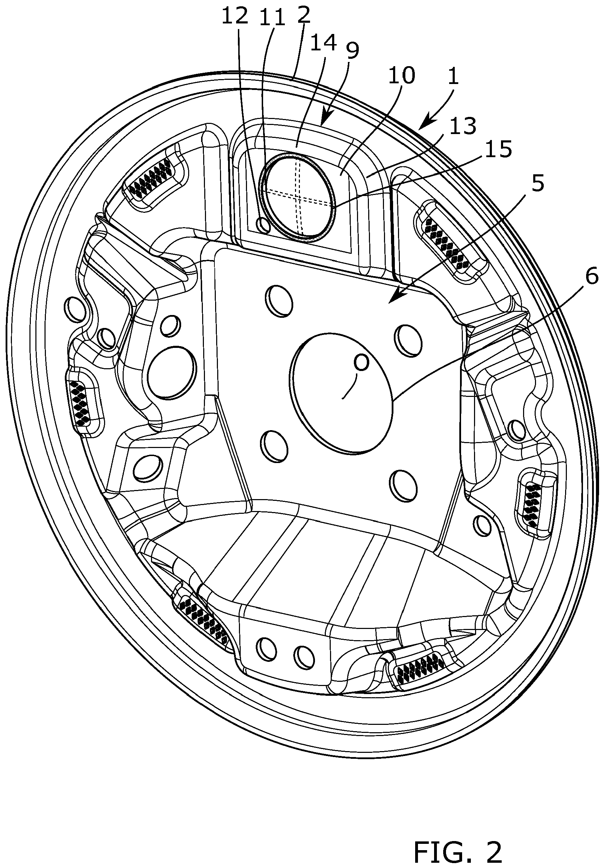

De manière facultative, la partie d'appui 10 est avantageusement recouverte en partie ou en totalité d'une résine 15 (figure 2).

Avantageusement, l'apport de résine 15 permet d'améliorer l'effet de réduction des vibrations, mais n'est pas nécessaire. En effet, le bénéfice procuré par la partie d'appui 10 convexe peut être suffisant.

Préférentiellement, la résine 15 est une résine anaérobie formant un joint liquide d'étanchéité mono composant et qui permet l'assemblage et l'étanchéité de pièces mécaniques. Une telle résine 15 peut être polymérisée lorsqu'elle est confinée et est en présence d'ions métalliques.

Par exemple, la résine 15 est préférentiellement la résine TB 1133EC commercialisée par la société THREE BOND®.

La résine 15 est avantageusement appliquée, par exemple, sous la forme d'un cordon, autour du deuxième orifice 11 (figure 2) ou sur le cylindre de roue 8. Ce cordon présente avantageusement une épaisseur comprise entre 0.1 et 4 millimètres.

Le plateau 1 selon l'invention est destinée à être monté fixe par rapport au châssis (non représenté) d'un véhicule automobile.

L'invention concerne également un frein à tambour de véhicule automobile (non représenté) comprenant le plateau 1 tel que décrit précédemment (figure 7).

Une seconde surface 4 du plateau 1 supporte avantageusement un cylindre de roue 8 hydraulique au niveau d'une zone de réception 9. La zone de réception 9 comprend préférentiellement une partie d'appui 10 au moins en partie en contact avec le cylindre de roue 8, partie d'appui 10 dans laquelle est ménagé un deuxième orifice 11 et un troisième orifice 12 de fixation qui est traversé par des moyens de fixation et étant de forme convexe. Et la partie d'appui 10 de forme convexe et le cylindre de roue 8 peuvent être en contact au niveau d'une interface de contact.

En dehors de cette interface de contact, la partie d'appui 10 de forme convexe et une surface 18 du cylindre de roue 8 sont en regard l'un de l'autre et à distance pour former un espace 17 (figure 6B).

La seconde surface 4 du plateau 1 supporte également deux segments 7 comportant chacun une garniture de frein 19.

Plus particulièrement, les extrémités supérieures 20 des segments 7 sont disposées de part et d'autre du cylindre de roue 8.

Des moyens de rappel 21, préférentiellement un ressort, sont fixés entre deux extrémités inférieures 22 des segments 7.

Le frein à tambour comprend avantageusement un tambour (non représenté) monté en rotation par rapport au plateau 1 et qui est apte et destiné à porter une roue (non représentée).

L'invention concerne également un procédé d'assemblage d'un frein à tambour de véhicule automobile.

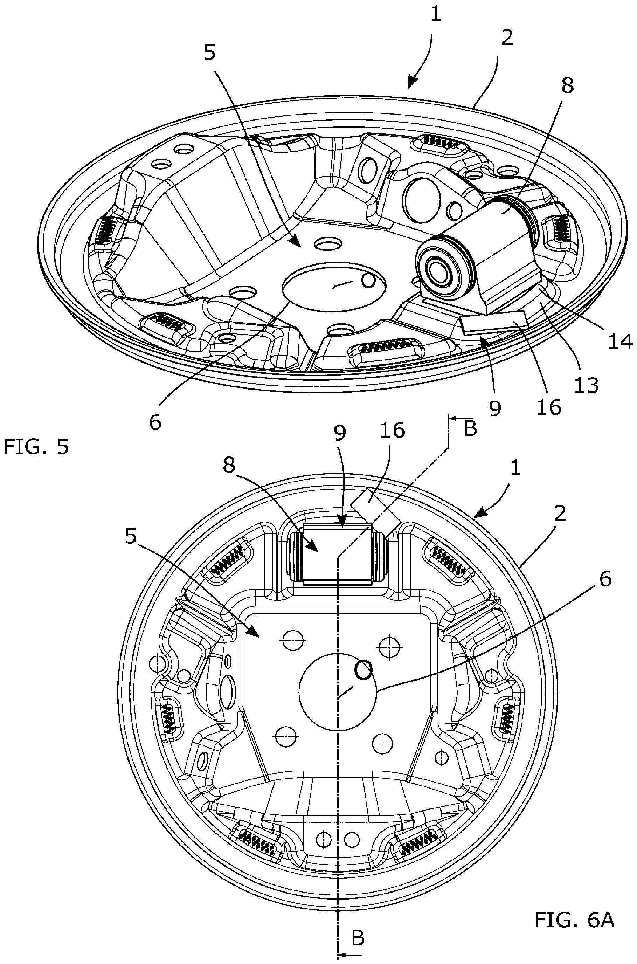

Conformément à l'invention, le procédé d'assemblage est caractérisé en ce qu'il comporte au moins les étapes suivantes :
a) une étape de montage d'un cylindre de roue 8 sur un plateau 1 tel que décrit précédemment, lors de laquelle un cylindre de roue 8 est monté sur le partie d'appui 10 de forme convexe et est fixé à la partie d'appui 10 par des moyens de fixation au travers du troisième orifice 12,
b) une étape de vérification lors de laquelle une cale 16 présentant une épaisseur pré-calibrée est interposée dans un espace 17 entre la partie d'appui 10 et la surface 18 du cylindre de roue 8 situé en regard de la partie d'appui 10 (figures 5, 6A et 6B).

Avantageusement, cet étape de vérification permet de contrôler que le contact entre le cylindre de roue 8 et la partie d'appui 10 est bien minimisé.

Préférentiellement, l'épaisseur pré-calibrée de la cale 16 est préférentiellement comprise entre 0.1 et 3 millimètres.

La cale 16 présente avantageusement la forme d'une plaque de forme rectangulaire (figures 5 et 6A)

Lors de l'étape de vérification b), la cale 16 est insérée dans l'espace 17, à l'opposé des moyens de fixation.

Cette façon de procéder facilite l'étape de vérification.

Les parties, éléments, composants, pièces et moyens suivants de l'invention sont référencés comme suit sur les dessins annexés :
- 1: plateau
- 2: bord circulaire
- 3: première surface
- 4: deuxième surface
- 5: base
- 6: premier orifice
- 7: segment
- 8: cylindre de roue
- 9: zone de réception
- 10: partie d'appui
- 11: deuxième orifice
- 12: troisième orifice
- 13: paroi latérale
- 14: bord courbé
- 15: résine
- 16: cale
- 17: espace
- 18: surface
- 19: garniture de frein
- 20: extrémité supérieure
- 21: moyens de rappel
- 22: extrémité inférieure

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini par les revendications.

## Revendications

1. Plateau (1) pour frein à tambour de véhicule automobile présentant un bord circulaire (2) et un centre O comprenant :
une première surface (3) apte et destinée à être montée fixe par rapport à un essieu,
une seconde surface (4) opposée à la première surface (3),
la seconde surface (4) comprenant une base centrale (5) sensiblement plane munie d'un premier orifice (6) centré par rapport au centre O,
la seconde surface (4) étant apte et destinée à supporter au moins un segment (7), et au moins un cylindre de roue (8) hydraulique au niveau d'une zone de réception (9), la zone de réception (9) comprenant une partie d'appui (10) apte et destinée à être au moins en partie en contact avec le cylindre de roue (8) et dans laquelle est ménagé un deuxième orifice (11) apte et destiné à former un accès au cylindre de roue (8), au moins un troisième orifice (12) de fixation apte et destiné à être traversé par des moyens de fixation, la zone de réception (9) formant une partie en relief saillante par rapport à la base centrale (5), la partie en relief saillante comprenant une paroi latérale (13) surmontée par la partie d'appui (10), plateau **caractérisé en ce que** la partie d'appui (10) présente une forme convexe.

2. Plateau selon la revendication 1, **caractérisé en ce que** la partie d'appui (10) présente une forme convexe de convexité comprise entre 0,2 et 1 millimètre.

3. Plateau selon l'une quelconque des revendications 1 à 2, **caractérisée en ce que** la partie d'appui (10) de forme convexe est entourée par un bord courbé (14) la reliant à la paroi latérale (13).

4. Plateau selon la revendication 3, **caractérisé en ce que** le bord courbé (14) présente un rayon de courbure compris entre 2 et 10 millimètres et **en ce que** la paroi latérale (13) est inclinée par rapport à la partie d'appui (10) d'un angle compris entre 90° et 150°.

5. Plateau selon l'une quelconque des revendications 1 à 4, **caractérisée en ce que** la partie d'appui (10) est recouverte en partie ou en totalité d'une résine (15).

6. Frein à tambour de véhicule automobile comprenant le plateau (1) selon l'une quelconque des revendications 1 à 5.

7. Frein à tambour selon la revendication 6, **caractérisé en ce qu'**une seconde surface (4) du plateau (1) supporte un cylindre de roue (8) hydraulique au niveau d'une zone de réception (9), la zone de réception (9) comprenant une partie d'appui (10) au moins en partie en contact avec le cylindre de roue (8), partie d'appui (10) dans laquelle est ménagé un deuxième orifice (11) et un troisième orifice (12) de fixation qui est traversé par des moyens de fixation et étant de forme convexe et **en ce que** la partie d'appui (10) de forme convexe et le cylindre de roue (8) sont en contact et forme une interface de contact.

8. Frein à tambour selon la revendication 7, **caractérisé en ce qu'**en dehors de cette interface de contact, la partie d'appui (10) de forme convexe et une surface (18) du cylindre de roue (8) sont en regard l'un de l'autre et à distance pour former un espace (17).

9. Procédé d'assemblage d'un frein à tambour de véhicule automobile **caractérisé en ce qu'**il comporte au moins les étapes suivantes :
a) une étape de montage d'un cylindre de roue (8) sur un plateau (1) selon l'une quelconque des revendications 1 à 5, lors de laquelle un cylindre de roue (8) est monté sur la partie d'appui (10) de forme convexe et est fixé à la partie d'appui (10) par des moyens de fixation au travers du troisième orifice (12),
b) une étape de vérification lors de laquelle une cale (16) présentant une épaisseur pré-calibrée est interposée dans un espace (17) entre la partie d'appui (10) et la surface (18) du cylindre de roue (8) situé en regard de la partie d'appui (10).

10. Procédé d'assemblage selon la revendication 9, **caractérisé en ce que** lors de l'étape de vérification b), la cale (16) est insérée dans l'espace (17), à l'opposé des moyens de fixation.

## Patentansprüche

1. Platte (1) für eine Kraftfahrzeugtrommelbremse mit einem kreisförmigen Rand (2) und einem Zentrum O, umfassend:
eine erste Fläche (3), die dazu geeignet und vorgesehen ist, relativ zu einer Achse fest montiert zu sein,
eine der ersten Fläche (3) gegenüberliegende zweite Fläche (4),
wobei die zweite Fläche (4) eine im Wesentlichen ebene zentrale Basis (5) umfasst, die mit einer ersten Öffnung (6) versehen ist, die relativ zum Zentrum O zentriert ist,
wobei die zweite Fläche (4) dazu geeignet und vorgesehen ist, zumindest ein Segment (7) und zumindest einen hydraulischen Radzylinder (8) im Bereich einer Aufnahmezone (9) zu tragen, wobei die Aufnahmezone (9) einen Auflageteil (10) umfasst, der dazu geeignet und vorgesehen ist, zumindest teilweise mit dem Radzylinder (8) in Kontakt zu stehen, und in dem eine zweite Öffnung (11) vorgesehen ist, die dazu geeignet und vorgesehen ist, einen Zugang zum Radzylinder (8) auszubilden, und zumindest eine dritte Befestigungsöffnung (12), die dazu geeignet und vorgesehen ist, von Befestigungsmitteln durchquert zu werden,
wobei die Aufnahmezone (9) einen erhabenen Teil bildet, der von der zentralen Basis (5) vorsteht, wobei der erhabene vorstehende Teil eine Seitenwand (13) umfasst, die vom Auflageteil (10) überragt wird,
wobei die Platte **dadurch gekennzeichnet ist, dass** der Auflageteil (10) eine konvexe Form aufweist.

2. Platte nach Anspruch 1, **dadurch gekennzeichnet, dass** der Auflageteil (10) eine konvexe Form mit einer Konvexität zwischen 0,2 und 1 Millimeter aufweist.

3. Platte nach einem der Ansprüche 1 bis 2, **dadurch gekennzeichnet, dass** der konvex geformte Auflageteil (10) von einem gekrümmten Rand (14) umgeben ist, der ihn mit der Seitenwand (13) verbindet.

4. Platte nach Anspruch 3, **dadurch gekennzeichnet, dass** der gekrümmte Rand (14) einen Krümmungsradius zwischen 2 und 10 Millimetern aufweist und dass die Seitenwand (13) relativ zum Auflageteil (10) um einen Winkel zwischen 90° und 150° geneigt ist.

5. Platte nach einem der Ansprüche 1 bis 4, **dadurch gekennzeichnet, dass** der Auflageteil (10) teilweise oder ganz mit einem Harz (15) bedeckt ist.

6. Kraftfahrzeugtrommelbremse, umfassend die Platte (1) nach einem der Ansprüche 1 bis 5.

7. Trommelbremse nach Anspruch 6, **dadurch gekennzeichnet, dass** eine zweite Fläche (4) der Platte (1) einen hydraulischen Radzylinder (8) im Bereich einer Aufnahmezone (9) trägt, wobei die Aufnahmezone (9) einen Auflageteil (10) umfasst, der zumindest teilweise mit dem Radzylinder (8) in Kontakt steht, wobei der Auflageteil (10), in dem eine zweite Öffnung (11) und eine von Befestigungsmitteln durchquerte dritte Befestigungsöffnung (12) vorgesehen sind, von konvexer Form ist, und dadurch, dass der konvex geformte Auflageteil (10) und der Radzylinder (8) in Kontakt stehen und eine Kontaktfläche bilden.

8. Trommelbremse nach Anspruch 7, **dadurch gekennzeichnet, dass** außerhalb dieser Kontaktfläche der konvex geformte Auflageteil (10) und eine Fläche (18) des Radzylinders (8) gegenüberliegend und voneinander beabstandet angeordnet sind, um einen Abstand (17) zu bilden.

9. Verfahren zur Montage einer Kraftfahrzeugtrommelbremse, **dadurch gekennzeichnet, dass** es zumindest die folgenden Schritte aufweist:
a) einen Schritt der Montage eines Radzylinders (8) auf einer Platte (1) nach einem der Ansprüche 1 bis 5, bei dem ein Radzylinder (8) auf dem konvex geformten Auflageteil (10) montiert und mit Befestigungsmitteln durch die dritte Öffnung (12) am Auflageteil (10) befestigt wird,
b) einen Prüfschritt, bei dem ein Keil (16) mit einer vorkalibrierten Dicke in einem Raum (17) zwischen dem Auflageteil (10) und der dem Auflageteil (10) gegenüberliegenden Fläche (18) des Radzylinders (8) angeordnet wird.

10. Montageverfahren nach Anspruch 9, **dadurch gekennzeichnet, dass** bei dem Prüfschritt b) der Keil (16) in den den Befestigungsmitteln gegenüberliegenden Raum (17) eingesetzt wird.

## Claims

1. Backing plate (1) for a motor vehicle drum brake having a circular edge (2) and a centre O, comprising:
a first surface (3) able and intended to be mounted fixed with respect to an axle,
a second surface (4) opposite the first surface (3) ,
the second surface (4) comprising a substantially planar central base (5) provided with a first orifice (6) centred with respect to the centre O,
the second surface (4) being able and intended to support at least one tube (7), and at least one hydraulic wheel cylinder (8) at a receiving region (9), the receiving region (9) comprising a bearing portion (10) able and intended to be at least partly in contact with the wheel cylinder (8) and in which there is formed a second orifice (11) able and intended to form an access to the wheel cylinder (8), and at least one third fastening orifice (12) able and intended to be traversed by fastening means,
the receiving region (9) forming a projecting relief portion with respect to the central base (5), the projecting relief portion comprising a lateral wall (13) surmounted by the bearing portion (10), which backing plate is **characterized in that** the bearing portion (10) has a convex shape.

2. Backing plate according to Claim 1, **characterized in that** the bearing portion (10) has a convex shape with a convexity of between 0.2 and 1 millimetre.

3. Backing plate according to either one of Claims 1 and 2, **characterized in that** the bearing portion (10) of convex shape is surrounded by a curved edge (14) connecting it to the lateral wall (13).

4. Backing plate according to Claim 3, **characterized in that** the curved edge (14) has a radius of curvature of between 2 and 10 millimetres, and **in that** the lateral wall (13) is inclined with respect to the bearing portion (10) by an angle of between 90° and 150°.

5. Backing plate according to any one of Claims 1 to 4, **characterized in that** the bearing portion (10) is partly or completely covered by a resin (15).

6. Motor vehicle drum brake comprising the backing plate (1) according to any one of Claims 1 to 5.

7. Drum brake according to Claim 6, **characterized in that** a second surface (4) of the backing plate (1) supports a hydraulic wheel cylinder (8) at a receiving region (9), the receiving region (9) comprising a bearing portion (10) at least partly in contact with the wheel cylinder (8), in which bearing portion (10) there is formed a second orifice (11) and a third fastening orifice (12) which is traversed by fastening means and being of convex shape, and **in that** the bearing portion (10) of convex shape and the wheel cylinder (8) are in contact and form a contact interface.

8. Drum brake according to Claim 7, **characterized in that**, outside this contact interface, the bearing portion (10) of convex shape and a surface (18) of the wheel cylinder (8) face one another and are at a distance to form a space (17).

9. Method for assembling a motor vehicle drum brake, **characterized in that** it comprises at least the following steps:
a) a step of mounting a wheel cylinder (8) on a backing plate (1) according to any one of Claims 1 to 5, during which a wheel cylinder (8) is mounted on the bearing portion (10) of convex shape and is fixed to the bearing portion (10) by fastening means through the third orifice (12),
b) a verification step during which a shim (16) having a precalibrated thickness is interposed in a space (17) between the bearing portion (10) and the surface (18) of the wheel cylinder (8) situated facing the bearing portion (10).

10. Assembly method according to Claim 9, **characterized in that**, during the verification step b), the shim (16) is inserted into the space (17) away from the fastening means.
